# EUROPÄISCHE PATENTSCHRIFT

(11) **EP 1 468 718 B1**
(45) Veröffentlichungstag und Bekanntmachung des Hinweises auf die Patenterteilung: **02.09.2009**
(21) Anmeldenummer: 04001150.4
(22) Anmeldetag: 21.01.2004
(51) Int. Cl.: B01D 53/02

(54) **Luftfiltereinheit mit mehreren Filterelementen**
Air filter unit with several filtering media
Ensemble de filtre à air a plusieurs milieux filtrants

(30) Priorität: 17.04.2003 DE 10318054
(43) Veröffentlichungstag der Anmeldung: 20.10.2004
(73) Patentinhaber: Blücher GmbH, 40699 Erkrath (DE)
(72) Erfinder: von Blücher, Hasso, 40699 Erkrath (DE); Ouvry, Ludovic, 40239 Düsseldorf (DE); Kämper, Stefan, 40878 Ratingen (DE); Moskopp, Michael, 41366 Schwalmtal (DE); de Ruiter, Ernest, Dr., 51371 Leverkusen (DE); Böhringer, Bertram, Dr., 42115 Wuppertal (DE)
(74) Vertreter: Gesthuysen, von Rohr & Eggert

(56) Entgegenhaltungen:
- DE-A- 19 849 389
- GB-A- 2 022 446
- US-A- 4 236 902
- PATENT ABSTRACTS OF JAPAN Bd. 2003, Nr. 08, 6. August 2003 (2003-08-06) & JP 2003 102818 A (AKUSHII:KK), 8. April 2003 (2003-04-08)
- PATENT ABSTRACTS OF JAPAN Bd. 0130, Nr. 42 (C-564), 30. Januar 1989 (1989-01-30) & JP 63 242341 A (OSAKA GAS CO LTD), 7. Oktober 1988 (1988-10-07)

## Beschreibung

Die vorliegende Erfindung betrifft eine Filtereinheit, insbesondere zur Reinigung von Luft, nach dem Oberbegriff des Anspruchs 1.

Des weiteren betrifft die vorliegende Erfindung die Verwendung dieser Filtereinheit zur Reinigung von Luft, insbesondere zur Herstellung hochreiner Luft, bzw. zur Entfernung von Gas-, Geruchs- oder Giftstoffen aus Luftströmen, beispielsweise in (Be-)Lüftungsanlagen, Ventilationssystemen, Klimaanlagen oder dergleichen.

Schließlich betrifft die vorliegende Erfindung Anlagen bzw. Systeme zur Luftreinigung bzw. Bereitstellung oder Aufbereitung von Luft, insbesondere (Be-)-Lüftungsanlagen, Ventilationssysteme oder Klimaanlagen, mit dieser Filtereinheit.

Durch steigendes Umweltbewußtsein sowie durch hochempfindliche Analysemethoden ist die Belastung der Umwelt durch Schadstoffe immer mehr ins Licht der Öffentlichkeit gerückt.

Die zunehmende Industrialisierung hat zudem zu einer weiträumigen Verschmutzung der Atmosphäre geführt. Jede Art von Verbrennungsvorgang, z. B. in Kraftwerken, von Automobilmotoren, durch Heizen etc., führt zu unerwünschten Verbrennungsprodukten, insbesondere oxidierten Kohlenstoffverbindungen, Stickoxiden, unvollständig verbrannten Kohlenwasserstoffen und dergleichen.

Daneben gibt es Schadstoffbelastungen durch kontaminierte Räume, in denen schadstoffbelastete Materialien verbaut sind (z. B. PCB-belastete Baustoffe etc.). Auch von Möbelstücken, Wandanstrichen, Teppichbodenklebern und dergleichen können Giftstoffe freigesetzt werden.

In jüngster Zeit hat zudem die Gefahr zugenommen, daß durch terroristische Anschläge gezielt Giftstoffe in Klimaanlagen von Gebäuden, in die Belüftungssysteme von U-Bahnschächten etc. eingetragen werden.

Daher besteht insgesamt ein großer Bedarf, verschiedenartigste luftverschmutzende Substanzen, insbesondere schädigende bzw. störende Schad-, Gift- oder Geruchsstoffe, aus der Luft zu entfernen. Hierzu gibt es im Stand der Technik eine Reihe von Verfahren, um solche Substanzen zu entfernen. Beispielsweise seien hier mechanische Filterungsverfahren, Umsetzung bzw. Zersetzung der störenden bzw. schädigenden Substanzen sowie Absorptions- und Adsorptionsverfahren genannt.

Bei den Adsorptionsverfahren kommen adsorptiv wirkende Filtereinheiten zum Einsatz. Das Problem hierbei ist oftmals, daß die aus dem Stand der Technik bekannten Filtereinheiten eine nicht immer ausreichende Adsorptionskapazität aufweisen, die relativ schnell erschöpft ist, so daß die Filtermaterialien ausgetauscht werden müssen. Des weiteren besitzen aus dem Stand der Technik bekannte Adsorptionsfiltereinheiten eine nicht immer ausreichende "Spontaneität" bzw. Adsorptionskinetik, so daß es zu Durchbrüchen kommen kann. Oftmals bieten die aus dem Stand der Technik bekannten Adsorptionsfiltereinheiten auch eine nur unzulängliche Adsorptionsleistung und sind nicht universell für die Adsorption unterschiedlichster Schad- bzw. Giftsstoffe geeignet.

Die Aufgabe der vorliegenden Erfindung besteht somit in der Bereitstellung einer Filtereinheit, welche sich insbesondere zur Reinigung von Luft eignet.

Eine weitere Aufgabe der vorliegenden Erfindung ist die Bereitstellung einer Filtereinheit für die Luftreinigung bzw. -aufbereitung, welche die zuvor geschilderten Probleme des Standes der Technik - zumindest teilweise - vermeidet. Insbesondere sollte eine solche Filtereinheit eine ausreichende Adsorptions- bzw. Beladungskapazität in bezug auf zu adsorbierende Schad-, Gift- und Geruchsstoffe bei gleichzeitig gutem Durchbruchverhalten aufweisen.

Das der vorliegenden Erfindung zugrundeliegende Problem wird durch eine Filtereinheit nach Anspruch 1 gelöst. Weitere, vorteilhafte Ausgestaltungen sind Gegenstand der Unteransprüche.

Für eine hohe Adsorptionsleistung bzw. -kapazität bei gleichzeitig gutem Durchbruchverhalten der erfindungsgemäßen Filtereinheit ist es , erforderlich daß der mittlere Teilchendurchmesser der kornförmigen Aktivkohle des ersten Filterelements größer ist als der mittlere Teilchendurchmesser der kornförmigen Aktivkohle des zweiten Filterelements, mindestens um 0,05 mm, vorteilhaft mindestens um 0,1 mm, bevorzugt mindestens um 0,15 mm, besonders bevorzugt mindestens um 0,2 mm, ganz besonders bevorzugt mindestens um 0,25 mm.

Um die Adsorptionsleistung der erfindungsgemäßen Filtereinheit im Bedarfsfall noch zu erhöhen, kann es gemäß einer Ausführungsform der vorliegenden Erfindung vorgesehen sein, zwischen dem ersten Filterelement und dem zweiten Filterelement zusätzlich mindestens ein weiteres Filterelement anzuordnen bzw. vorzusehen, welches als Adsorptionsmaterial kornförmige, insbesondere kugelförmige Aktivkohle umfaßt. In bezug auf weitere Einzelheiten zu dieser besonderen Ausführungsform der vorliegenden Erfindung kann auf die folgende Beschreibung eines in der Zeichnung dargestellten Ausführungsbeispiels verwiesen werden.

Weitere Vorteile, Eigenschaften, Aspekte und Merkmale der vorliegenden Erfindung ergeben sich aus der folgenden Beschreibung eines in der Zeichnung dargestellten, bevorzugten Ausführungsbeispiels. Es zeigt:
- Fig. 1: eine schematische Darstellung einer erfindungsgemäßen Filtereinheit; und
- Fig. 2: eine schematische Darstellung einer Anlage zur Luftreinigung mit einer erfindungsgemäßen Filtereinheit.

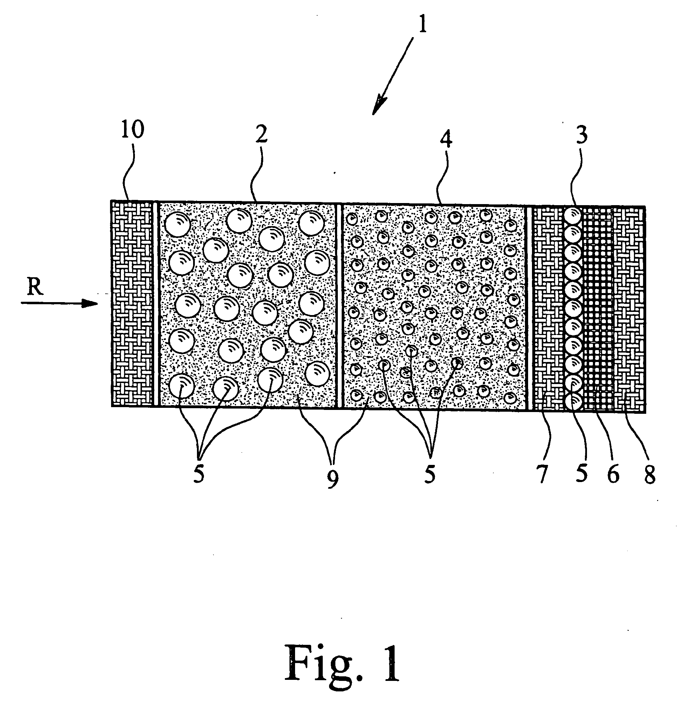

Fig. 1 zeigt eine erfindungsgemäße Filtereinheit 1 mit einer Mehrzahl adsorbierender Filterelemente 2, 3 und 4, welche als Adsorptionsmaterial jeweils Adsorbentien auf Basis von Aktivkohle enthalten, wobei die Filtereinheit 1
(i) mindestens ein erstes Filterelement 2, welches als Adsorptionsmaterial kornförmige, insbesondere kugelförmige Aktivkohle 5 umfaßt,
(ii) mindestens ein weiteres Filterelement 4, welches als Adsorptionsmaterial kornförmige, insbesondere kugelförmige Aktivkohle 5 umfaßt, und
(iii) mindestens ein zweites Filterelement 3, welches als Adsorptionsmaterial eine Kombination von kornförmiger, insbesondere kugelförmiger Aktivkohle 5 und Aktivkohlefasern 6 umfaßt,
einschließt.

Die Filterelemente 2, 3 und 4 sind stromabwärts in der zuvor spezifizierten Reihenfolge einer nach dem anderen in der Filtereinheit 1 angeordnet Mit anderen Worten sind die Filterelemente 2, 3 und 4 in Richtung R der einströmenden bzw. zuströmenden Luft hintereinander, insbesondere unmittelbar aufeinander folgend, in der zuvor genannten Reihenfolge geschaltet.

Den Filterelementen 2, 3 und 4 kann ein Trennungsfilterelement 10 zur Abtrennung von Feststoffpartikeln, insbesondere Staubpartikeln, vorgeschaltet sein. Das Trennungsfilterelement 10 ist also stromaufwärts zu den Filterelementen 2, 3 und 4 angeordnet. Das Trennungsfilterelement 10 kann ein textiles Gebilde, insbesondere ein Gewebe, Gewirke, Gestricke, Gelege, Gewirre, Vlies, Filz oder sonstiger Textilverbundstoff, sein. Das Trennungsfilterelement 10 bewirkt im allgemeinen eine rein mechanische Abtrennung von Feststoffpartikeln, so daß die nachgeschalteten Filterelemente 2, 3 und 4 nicht mit Feststoffpartikeln zugesetzt werden. Das Trennungsfilterelement 10 ist im allgemeinen inert, d. h. besitzt keinerlei adsorptive Eigenschaften.

Die kornförmige Aktivkohle 5 des ersten Filterelements 2 und/oder des weiteren, zwischen dem ersten Filterelement 2 und dem zweiten Filterelement 3 angeordneten Filterelements 4 kann beispielsweise als lose Schüttung vorliegen. Die lose Schüttung kann beispielsweise durch entsprechende Einrichtungen (z. B. Stege oder Rahmen) zusammengehalten werden.

Erfindungsgemäß ist es aber, daß die kornförmige Aktivkohle 5 des ersten Filterelements 2 und/oder des weiteren, zwischen dem ersten Filterelement 2 und dem zweiten Filterelement 3 angeordneten Filterelements 4 an einer dreidimensionalen, luftdurchlässigen Trägerstruktur 9 befestigt, insbesondere hiermit verklebt ist. Als dreidimensionale Trägerstruktur 9 eignet sich beispielsweise ein offenporiger Schaumstoff, vorzugsweise ein retikulierter Polyurethan(PU)-Schaumstoff, der mit kornförmiger Aktivkohle 5 beladen ist. Die Verklebung als solche ist dem Fachmann geläufig; hierfür eignen sich beispielsweise feuchtigkeitsvemetzende und/oder wärmevernetzende, insbesondere reaktive (Schmelz)-Klebstoffe, vorzugsweise auf Polyurethanbasis, mit denen der Schaumstoff zunächst getränkt wird, anschließend der überschüssige Klebstoff abgequetscht wird und dann die Beladung mit der kornförmigen Aktivkohle 5 erfolgt, gefolgt von einer Feuchtigkeits- und/oder Wärmebehandlung zur Vernetzung des Klebstoffs. Nach Möglichkeit sollte die Art und Menge des Klebstoffs so ausgelegt sein, daß die Oberfläche der kernförmigen Aktivkohle 5 nach der Verklebung in bezug auf die zu adsorbierenden Schad-, Gift- und Geruchsstoffe zu einem großen Teil frei zugänglich ist, d. h. nicht mit Klebstoff belegt ist, und zwar insbesondere zu mindestens 40 %, vorzugsweise zu mindestens 50 %, besonders bevorzugt zu mindestens 60 %, ganz besonders bevorzugt zu mindestens 70 % und mehr. Gleichermaßen kann aber auch ein hitzeklebriges Schaumstoffmaterial verwendet werden, so daß man bei dieser Ausführungsform ohne zusätzlichen Klebstoff auskommt. Für eine optimale Beladung des Schaumstoffs mit körniger Aktivkohle 5 ist es vorteilhaft, wenn der mittlere Porendurchmesser des offenporigen Schaumstoffs jeweils mindestens doppelt so groß, insbesondere mindestens zweieinhalbmal so groß, vorzugsweise mindestens dreimal so groß ist wie der mittlere Teilchendurchmesser der kernförmigen Aktivkohle 5 des ersten Filterelements 2 und/oder des weiteren, zwischen dem ersten Filterelement 2 und dem zweiten Filterelement 3 angeordneten Filterelements 4.

Eine besonders gute Adsorptionseffizienz der erfindungsgemäßen Filtereinheit läßt sich erreichen, wenn der mittlere Teilchendurchmesser der kernförmigen Aktivkohle 5 des ersten Filterelements 2 größer ist, mindestens 0,05 mm größer, vorzugsweise mindestens 0,1 mm größer, bevorzugt mindestens 0,15 mm größer, besonders bevorzugt mindestens 0,2 mm größer, ganz besonders bevorzugt mindestens 0,25 mm größer, als der mittlere Teilchendurchmesser der kornförmigen Aktivkohle 5 des weiteren, zwischen dem ersten Filterelement 2 und dem zweiten Filterelement 3 angeordneten Filterelements 4.

Der Vorteil, wenn man das Filterelement 2 mit der grobkörnigeren Aktivkohle - in Strömungsrichtung der einströmenden Luft betrachtet - vor das Filterelement 4 mit der feinkörnigeren Aktivkohle schaltet, ist insbesondere folgender: Das Filterelement 2 mit der grobkörnigeren Aktivkohle hat eine größere Beladungs- bzw. Adsorptionskapazität und fängt somit bereits einen Großteil der zu adsorbierenden Stoffe ab (ca. 90 bis 95 %); das Filterelement 4 mit der feinkörnigeren Aktivkohle dagegen hat zwar eine geringere Beladungs- bzw. Adsorptionskapazität, aber eine bessere Adsorptionskinetik, so daß es ohne weiteres die gegebenenfalls das erste Filterelement 2 durchbrechenden Stoffe adsorbieren kann. Denn die Menge an durchbrechenden Stoffen ist relativ gering, da die zu adsorbierenden Stoffe zum Großteil bereits von dem ersten Filterelement 2 adsorbiert werden, so daß das nachgeschaltete Filterelement 4 seine Funktion als Filterelement zur Adsorption von den das erste Filterelement 2 durchbrechenden Stoffen lange Zeit aufrechterhalten kann, da seine Kapazität für die Adsorption der relativ geringen Mengen durchbrechender Stoffe vollkommen ausreichend ist.

Der mittlere Teilchendurchmesser der kernförmigen Aktivkohle 5 des ersten Filterelements 2 kann in weiten Grenzen variieren. Im allgemeinen liegt der mittlere Teilchendurchmesser der kernförmigen Aktivkohle 5 des ersten Filterelements 2 im Bereich von 0,5 bis 1 mm und beträgt insbesondere mindestens 0,5 mm, vorzugsweise mindestens 0,6 mm, besonders bevorzugt mindestens 0,65 mm.

Der mittlere Teilchendurchmesser der kernförmigen Aktivkohle 5 des weiteren, zwischen dem ersten Filterelement 2 und dem zweiten Filterelement 3 angeordneten Filterelements 4 kann gleichermaßen in weiten Bereichen variieren. Im allgemeinen liegt der mittlere Teilchendurchmesser der kornförmigen Aktivkohle 5 des Filterelements 4 im Bereich von 0,1 bis 0,6 mm, insbesondere 0,2 bis 0,6 mm, bevorzugt 0,3 bis 0,6 mm.

Der mittlere Teilchendurchmesser der kornförmigen Aktivkohle 5 des zweiten Filterelements 3 kann ebenfalls in weiten Bereichen variieren. Im allgemeinen liegt der mittlere Teilchendurchmesser der kernförmigen Aktivkohle 5 des zweiten Filterelements 3 im Bereich von 0,05 bis 1 mm, insbesondere 0,1 bis 0,8 mm, vorzugsweise 0,1 bis 0,6 mm.

Die erfindungsgemäß eingesetzte kornförmige Aktivkohle 5 kann durch Carbonisieren und nachfolgende Aktivierung geeigneter organischer Ausgangsmaterialien in Kornform, vorzugsweise in Kugelform, hergestellt sein. Beispiele für geeignete Polymere sind beispielsweise divinylbenzolvernetztes Polystyrol. Dieses kann beispielsweise in Form von Ionenaustauschern (z. B. Kationenaustauschem) oder Vorstufen solcher Ionenaustauscher vorliegen. Bei den Ausgangsmaterialien kann es sich beispielsweise auch um poröse, insbesondere makroporöse, oder aber gelförmige Polymerkügelchen oder -körnchen handeln. Des weitem kann es sich bei den Ausgangsmaterialien beispielsweise auch um Pechkügelchen oder -körnchen handeln Die Herstellung korn- oder kugelförmiger Aktivkohle ist dem Fachmann bekannt. Beispielsweise kann verwiesen werden auf die EP 0 118 618 A1 und die WO 01/83368 A1 sowie auf H. v. Kienle, E. Bäder, "Aktivkohle und ihre industrielle Anwendung", Ferdinand Enke Verlag, Stuttgart 1980, deren jeweilige Offenbarung hiermit durch Bezugnahme eingeschlossen ist.

Was die erfindungsgemäß verwendeten Aktivkohlefasern 6 anbelangt, so können diese durch Carbonisieren und nachfolgende Aktivierung geeigneter organischer Ausgangsfasern hergestellt sein, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und Hanffasern. Vorzugsweise werden erfindungsgemäß carbonisierte und aktivierte Fasern auf Basis von Cellulose und Cellulosederivaten eingesetzt. Die Herstellung derartiger Aktivkohlefasern ist dem Fachmann bekannt; in diesem Zusammenhang kann beispielsweise verwiesen werden auf die DE 195 19 869 A1, die GB-PS 1 310 011, die DE 33 39 756 C2, die WO 01/70372 A1 sowie die EP 0 966 558 A2 bzw. deren Äquivalent DE 698 09 718 T2, wobei der gesamte Offenbarungsgehalt der zuvor genannten Druckschriften hiermit durch Bezugnahme eingeschlossen ist. Erfindungsgemäß besonders bevorzugte Aktivkohlefasern erhält man nach dem Verfahren gemäß der EP 0 966 558 A2 bzw. der DE 698 09 718 T2. Nach diesem Verfahren wird ein Fasergefüge aus einem Kohlenstoffvorläufermaterial auf Basis von Cellulose (z. B. Kunstseide, Florettseide, Solvatcellulosen, Baumwolle, Stengelfasern) mit einer Zusammensetzung imprägniert, die mindestens einen mineralischen Bestandteil (z. B. Phosphorsäure, Schwefelsäure, Salzsäure etc.) enthält, der eine Promotorwirkung für die Dehydratisierung der Cellulose hat, und anschließend das so imprägnierte Fasergefüge einer thermischen Behandlung bei einer Temperatur ausgesetzt, die ausreichend ist, um die Umwandlung des Vorläufers aus Cellulose im wesentlichen in Kohlenstoff hervorzurufen, wobei die thermische Behandlung in inerter oder teilweiser oxidierender Atmosphäre durchgeführt wird und in einem Temperaturanstieg mit einer mittleren Geschwindigkeit zwischen 1 und 15 °C/min, gefolgt von einer Stufe bei einer Temperatur zwischen 350 °C und 500 °C, besteht, und gefolgt wird von einem Entfernungsschritt von Restphasen der Imprägnierungszusammensetzung und von Abbauprodukten des Cellulosematerials durch Waschen.

Die erfindungsgemäß verwendeten Aktivkohlefasern 6 liegen vorzugsweise als textiles Aktivkohlefasergebilde vor. Beispiele hierfür sind Gewebe, Gewirke, Gestricke, Gelege, Gewirre, Vliese, Filze oder sonstige Textilverbundstoffe. Vorzugsweise sind hier Nonwoven-Materialien zu nennen, wie Vliese, Filze, Gelege (z. B. multidirektionale Gelege), daneben aber auch Gewebe. Ein erfindungsgemäß bevorzugtes Nonwoven-Material ist beispielsweise derart ausgebildet, daß die Aktivkohlefasern (Kohlenstoffasern) mit thermoplastischen, klebrig wirkenden Bikomponentenfasern zusammen ein Aktivkohlefasergefüge bilden, wobei der Gehalt an thermoplastischen Bikomponentenfasern 50 Gew.-%, bezogen auf das Gefüge, nicht überschreiten sollte. Erfindungsgemäß verwendbare, textile Aktivkohlefasergebilde haben im allgemeinen ein Flächengewicht von 10 bis 200 g/m², insbesondere 10 bis 150 g/m², vorzugsweise 10 bis 120 g/m², besonders bevorzugt 20 bis 100 g/m², ganz besonders bevorzugt 25 bis 80 g/m².

Die erfindungsgemäß eingesetzten Aktivkohlefasern 6 haben insbesondere mittlere Faserdurchmesser im Bereich von 1 bis 25 µm, insbesondere 2,5 bis 20 µm, vorzugsweise 5 bis 15 µm. Ihre längenbezogene Masse (Titer) liegt im allgemeinen im Bereich von 1 bis 10 dtex, insbesondere 1 bis 5 dtex.

Um eine besonders gute Adsorptionseffizienz zu erreichen, ist es erforderlich , wenn bei dem zweiten Filterelement 3 der mittlere Teilchendurchmesser der kernförmigen Aktivkohle 5 mindestens um das Dreifache, insbesonderevorteilhaft mindestens um das Vierfache, vorzugsweise vorteilhaft mindestens um das Fünffache, besonders vorteilhaft bevorzugt mindestens um das Sechsfache, größer ist als der mittlere Faserdurchmesser der Aktivkohlefasern 6.

Die dem zweiten Filterelement 3 sind die kornförmige Aktivkohle 5 und die Aktivkohlefasem 6 im allgemeinen in separaten, jedoch aneinander angrenzenden bzw. dauerhaft miteinander verbundenen, insbesondere miteinander verklebten Lagen angeordnet. Auf diese Weise können die Lage mit der kornförmigen Aktivkohle 5 und die Lage mit den Aktivkohlefasern 6 einen Verbund bilden.

Gemäß einer besonderen Ausführungsform der vorliegenden Erfindung können bei dem zweiten Filterelement 3 die kornförmige Aktivkohle 5 und/oder die Aktivkohlefasern 6 jeweils an einem luftdurchlässigen, vorzugsweise textilen Träger 7 bzw. 8 befestigt, insbesondere hiermit verklebt sein. Ein geeigneter textiler Träger 7 bzw. 8 ist z. B. ein textiles Flächengebilde, vorzugsweise ein Gewebe, Gewirke, Gestricke, Gelege, Gewirre, Vlies, Filz oder sonstiger Textilverbundstoff. Der textile Träger 7 bzw. 8 weist im allgemeinen ein Flächengewicht von 50 bis 300 g/m², insbesondere 75 bis 250 g/m², vorzugsweise 90 bis 175 g/m², auf.

Erfindungsgemäß bevorzugt verwendet man Aktivkohle mit einer relativ großen spezifischen Oberfläche. Im allgemeinen weisen die kornförmige Aktivkohle 5 und die Aktivkohlefasern 6 eine spezifische innere Oberfläche (BET-Methode) von mindestens 800 m²/g, insbesondere mindestens 900 m²/g, vorzugsweise im Bereich von 800 bis 1.500 m²/g, auf.

Je nach Anwendung kann es vorteilhaft oder erforderlich sein, das Adsorptionsmaterial, d. h. die kornförmige Aktivkohle 5 und/oder die Aktivkohlefasern 6, mit einer Imprägnierung auszustatten. Je nach Anwendung, insbesondere je nach Art und Menge der zu adsorbierenden Gift-, Schad- bzw. Geruchsstoffe, können sich beispielsweise unterschiedliche Imprägnierungen eignen. Beispiele für Imprägnierungen sind z. B. Imprägnierungen auf Basis von Metallen und/oder Metallverbindungen, bevorzugt aus der Gruppe von Kupfer, Cadmium, Silber, Platin, Palladium, Zink und Quecksilber sowie deren Verbindungen, und/oder saure oder basische Imprägnierungen, insbesondere auf Basis von Phosphorsäure, Kaliumcarbonat, Trimethanolamin, 2-Amino-1,3-propandiol, Schwefel oder Kupfersalzen. Die Menge an Imprägniermittel kann je nach Einsatz angepaßt werden. Im allgemeinen beträgt die Menge an Imprägniermittel(n), bezogen auf das imprägnierte Aktivkohlematerial, 0,01 bis 15 Gew.-%, insbesondere 0,05 bis 12 Gew.-%, vorzugsweise 5 bis 12 Gew.-%. Die Imprägnierung von Aktivkohle ist aus dem Stand der Technik bekannt; für weitere diesbezügliche Einzelheiten kann beispielsweise verwiesen werden auf die zuvor zitierte Literaturstelle von H. v. Kienle, E. Bäder, "Aktivkohle und ihre industrielle Anwendung", Ferdinand Enke Verlag, Stuttgart 1980, sowie die DE 195 19 869 A1, die DE 44 32 834 A1 und die DE 44 47 844 A1.

Anwendungsbedingt kann es vorteilhaft sein, einzelnen oder allen Filterelementen 2, 3 bzw. 4, insbesondere dem ersten Filterelement 2, Meßeinrichtungen (z. B. Sensoren oder Sonden) nachzuschalten, die in bezug auf die zu adsorbierenden Stoffe sensitiv sind und auf diese Weise Durchbrüche anzeigen bzw. detektieren können. Hierdurch läßt sich dann auf einfache Weise feststellen, ob die Kapazität eines oder mehrerer Filterelemente 2, 3 bzw. 4 erschöpft ist und das bzw. die betreffenden Filterelemente 2, 3 bzw. 4 gegebenenfalls auszutauschen sind. Besonders wichtig ist dies in bezug auf das erste Filterelement 2, weil gerade dieses Filterelement den Großteil der zu adsorbierenden Stoffe aufnimmt und folglich, falls die Kapazität gerade dieses Filterelements erschöpft ist, die nachgeschalteten Filterelemente überlastet sein können bzw. deren Kapazität zu schnell erschöpft sein kann.

Die erfindungsgemäße Filtereinheit zeichnet sich durch eine exzellente Adsorptionsleistung, insbesondere eine hohe Adsorptions- bzw. Beladungskapazität in bezug auf zu adsorbierende Schad-, Gift- und Geruchsstoffe bei gleichzeitig exzellentem Durchbruchverhalten (kein Durchschlagen von zu adsorbierenden Schad-, Gift- und Geruchsstoffen), aus.

Aufgrund der relativ unspezifischen Adsorptionseigenschaften der erfindungsgemäßen Filtereinheit eignet sie sich zur Adsorption beliebiger Schad-, Gift- und Geruchsstoffe und ist somit universell einsetzbar.

Des weiteren bietet die erfindungsgemäße Filtereinheit den Vorteil einer guten Regenerierbarkeit, so daß ein Recycling ohne weiteres möglich ist.

Ein weiterer Gegenstand der vorliegenden Erfindung ist die Verwendung der erfindungsgemäßen Filtereinheit zur Reinigung von Luft, insbesondere zur Herstellung hochreiner Luft, und/oder zur Entfernung von Gas-, Geruchs- und/oder Giftstoffen aller Art aus Luftströmen. Hierbei ist die erfindungsgemäße Filtereinheit derart angeordnet, daß sie von der zu reinigenden Luft durchströmt wird.

Die erfindungsgemäße Filtereinheit kann beispielsweise in (Be-)-Lüftungsanlagen, Ventilationssystemen oder Klimaanlagen, insbesondere für geschlossene Umgebungen, wie Gebäude oder Innenräume von Fahrzeugen, wie Motorfahrzeugen, Schienenfahrzeugen, Transportmitteln aller Art und dergleichen, zur Anwendung kommen.

Dabei kann die Filtereinheit permanent zugeschaltet sein oder aber auch nur im Bedarfsfall, insbesondere bei Vorhandensein bzw. Auftreten von Gas-, Geruchsund/oder Giftstoffen in den zu reinigenden Luftströmen, zugeschaltet werden, sozusagen in der Art eines Bypass. Letztere Variante hat den Vorteil, daß so die Adsorptionsleistung der Filtereinheit nicht unnötig in Anspruch genommen wird und längere Standzeiten erreicht werden.

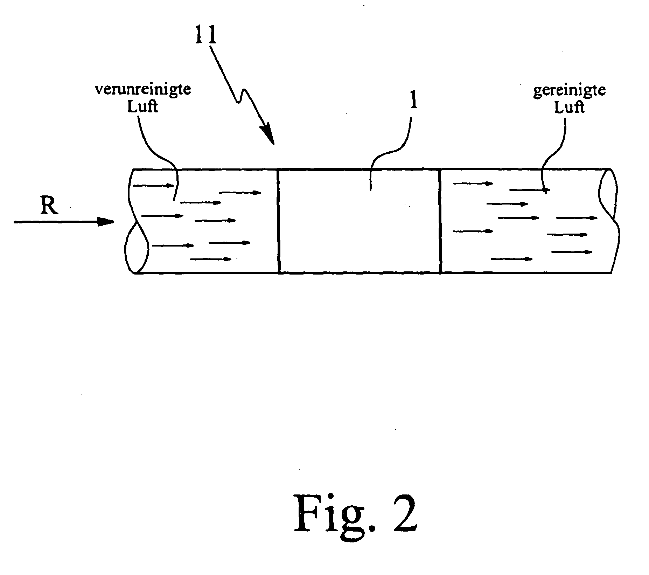

Schließlich sind ein weiterer Gegenstand der vorliegenden Erfindung Anlagen bzw. Systeme zur Luftreinigung bzw. zur Bereitstellung oder Aufbereitung von Luft, insbesondere (Be-)Lüftungsanlagen, Ventilationssysteme oder Klimaanlagen, die eine erfindungsgemäße Filtereinheit umfassen. Eine derartige Anlage bzw. ein derartiges System 11 ist schematisch in Fig. 2 dargestellt

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt, der in den Ansprüchen definiert wird.

## Patentansprüche

1. Filtereinheit (1), insbesondere zur Reinigung von Luft, mit einer Mehrzahl adsorbierender Filterelemente (2, 3, 4), die als Adsorptionsmaterial jeweils Adsorbentien auf Basis von Aktivkohle enthalten, wobei die Filtereinheit (1)
(i) mindestens ein erstes Filterelement (2), welches als Adsorptionsmaterial kornförmige, insbesondere kugelförmige Aktivkohle (5) umfaßt,
(ii) mindestens ein weiteres Filterelement (4), welches als Adsorptionsmaterial kornförmige, insbesondere kugelförmige Aktivkohle (5) umfaßt, und
(iii) mindestens ein zweites Filterelement (3), welches als Adsorptionsmaterial eine Kombination von kornförmiger, insbesondere kugelförmige Aktivkohle (5) und Aktivkohlefasern (6) umfaßt, wobei der mittlere Teilchendurchmesser der kornförmigen Aktivkohle (5) mindestens um das Dreifache größer ist als der mittlere Faserdurchmesser der Aktivkohlefasern (6) und wobei die kornförmige Aktivkohle (5) und die Aktivkohlefäsern (6) in separaten, jedoch aneinander angrenzenden und dauerhaft miteinander verbundenen Lagen angeordnet sind,
einschließt,
wobei die Filterelemente (2, 3, 4) stromabwärts in der zuvor spezifizierten Reihenfolge eines nach dem anderen in der Filtereinheit (1) angeordnet sind,
wobei der mittlere Teilchendurchmesser der kornförmigen Aktivkohle (5) des ersten Filterelements (2) mindestens 0,05 mm größer ist als der mittlere Teilchendurchmesser der kornförmigen Aktivkohle (5) des weiteren, zwischen dem ersten Filterelement (2) und dem zweiten Filterelement (3) angeordneten Filterelements (4) und
wobei die kornförmige Aktivkohle (5) des ersten Filterelements (2) und/oder des weiteren, zwischen dem ersten Filterelement (2) und dem zweiten Filterelement (3) angeordneten Filterelements (4) an einer dreidimensionalen, luftdurchlässigen Trägerstruktur (9) befestigt ist.

2. Filtereinheit nach Anspruch 1, **dadurch gekennzeichnet, daß** den Filterelementen (2, 3, 4) ein Trennungsfilterelement (10) zur Abtrennung von Feststoffpartikeln, insbesondere Staubpartikeln, vorgeschaltet ist, insbesondere wobei das Trennungsfilterelement (10) ein textiles Gebilde, insbesondere ein Gewebe, Gewirke, Gestricke, Gelege, Gewirre, Vlies, Filz oder sonstiger Textilverbundstoff, ist und/oder insbesondere wobei das Trennungsfilterelement (10) eine rein mechanische Abtrennung von Feststoffpartikeln bewirkt.

3. Filtereinheit nach einem der vorangehenden Ansprüche, **dadurch gekennzeichnet, daß** die kornförmige Aktivkohle (5) des ersten Filterelements (2) und/oder des weiteren, zwischen dem ersten Filterelement (2) und dem zweiten Filterelement (3) angeordneten Filterelements (4) mit der dreidimensionalen, luftdurchlässigen Trägerstruktur (9) verklebt ist, insbesondere wobei die dreidimensionale Trägerstruktur (9) ein offenporiger Schaumstoff, vorzugsweise ein retikulierter Polyurethan(PU)-Schaumstoff, ist.

4. Filtereinheit nach Anspruch 3, **dadurch gekennzeichnet, daß** der mittlere Porendurchmesser des offenporigen Schaumstoffs mindestens doppelt so groß, insbesondere mindestens zweieinhalbmal so groß, vorzugsweise mindestens dreimal so groß ist wie der mittlere Teilchendurchmesser der kornförmigen Aktivkohle (5) des ersten Filterelements (2) und/oder des weiteren, zwischen dem ersten Filterelement (2) und dem zweiten Filterelement (3) angeordneten Filterelements (4) und/oder daß die Verklebung der kornförmigen Aktivkohle (5) mit der dreidimensionalen Trägerstruktur (9) mittels feuchtigkeitsvernetzenden und/oder wärmevernetzenden, insbesondere reaktiven (Schmelz-)Klebern, vorzugsweise auf Polyurethanbasis, erfolgt.

5. Filtereinheit nach einem der vorangehenden Ansprüche, **dadurch gekennzeichnet, daß** der mittlere Teilchendurchmesser der kornförmigen Aktivkohle (5) des ersten Filterelements (2) mindestens 0,1 mm größer, bevorzugt mindestens 0,15 mm größer, besonders bevorzugt mindestens 0,2 mm größer, ganz besonders bevorzugt mindestens 0,25 mm größer ist als der mittlere Teilchendurchmesser der kornförmigen Aktivkohle (5) des weiteren, zwischen dem ersten Filterelement (2) und dem zweiten Filterelement (3) angeordneten Filterelements (4).

6. Filtereinheit nach einem der vorangehenden Ansprüche, **dadurch gekennzeichnet, daß** der mittlere Teilchendurchmesser der kornförmigen Aktivkohle (5) des ersten Filterelements (2) im Bereich von 0,5 bis 1 mm liegt und insbesondere mindestens 0,5 mm, insbesondere mindestens 0,6 mm, vorzugsweise mindestens 0,65 mm, beträgt und/oder daß der mittlere Teilchendurchmesser der kornförmigen Aktivkohle (5) des weiteren, zwischen dem ersten Filterelement (2) und dem zweiten Filterelement (3) angeordneten Filterelements (4) im Bereich von 0,1 bis 0,6 mm, insbesondere 0,2 bis 0,6 mm, bevorzugt 0,3 bis 0,6 mm, liegt.

7. Filtereinheit nach einem der vorangehenden Ansprüche, **dadurch gekennzeichnet, daß** der mittlere Teilchendurchmesser der kornförmigen Aktivkohle (5) des zweiten Filterelements (3) im Bereich von 0,05 bis 1 mm, insbesondere 0,1 bis 0,8 mm, vorzugsweise 0,1 bis 0,6 mm, liegt.

8. Filtereinheit nach einem der vorangehenden Ansprüche, **dadurch gekennzeichnet, daß** die kornförmige Aktivkohle (5) hergestellt ist durch Carbonisieren und nachfolgende Aktivierung geeigneter organischer Ausgangsmaterialien in Kornform, vorzugsweise in Kugelform, insbesondere von geeigneten Polymeren, wie divinylbenzolvernetztes Polystyrol, insbesondere in Form von Ionenaustauschern oder deren Vorstufen, oder von Pechen.

9. Filtereinheit nach einem der vorangehenden Ansprüche, **dadurch gekennzeichnet, daß** die Aktivkohlefasern (6) hergestellt sind durch Carbonisieren und nachfolgende Aktivierung geeigneter organischer Ausgangsfasern, insbesondere von Cellulosefasern, Fasern auf Basis von Cellulosederivaten, Phenolharzfasern, Polyvinylalkoholfasem, Pechfasern, Acrylharzfäsern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern, vorzugsweise von Fasern auf Basis von Cellulose und Cellulosederivaten.

10. Filtereinheit nach einem der vorangehenden Ansprüche, **dadurch gekennzeichnet, daß** die Aktivkohlefasern (6) als textiles Aktivkohlefasergebilde, insbesondere als Gewebe, Gewirke, Gestricke, Gelege, Gewirre, Vlies, Filz oder sonstiger Textilverbundstoff, vorzugsweise als Nonwoven-Material, vorliegen, insbesondere wobei das textile Aktivkohlefasergebilde ein Flächengewicht von 10 bis 200 g/m², insbesondere 10 bis 150 g/m², vorzugsweise 10 bis 120 g/m², besonders bevorzugt 20 bis 100 g/m², ganz besonders bevorzugt 25 bis 80 g/m², aufweist und/oder daß die Aktivkohlefasern (6) mittlere Faserdurchmesser von 1 bis 25 µm, insbesondere 2,5 bis 20 µm, vorzugsweise 5 bis 15 µm, aufweisen und/oder daß die Aktivkohlefasern (6) eine längenbezogene Masse (Titer) von 1 bis 10 dtex, insbesondere 1 bis 5 dtex, aufweisen.

11. Filtereinheit nach einem der vorangehenden Ansprüche, **dadurch gekennzeichnet, daß** die Lage mit der kernförmigen Aktivkohle (5) und die Lage mit den Aktivkohlefasern (6) einen Verbund bilden können.

12. Filtereinheit nach einem der vorangehenden Ansprüche, **dadurch gekennzeichnet, daß** bei dem zweiten Filterelement (3) die kornförmige Aktivkohle (5) und/oder die Aktivkohlefasern (6) an einem luftdurchlässigen, vorzugsweise textilen Träger (7, 8) befestigt, insbesondere hiermit verklebt ist, insbesondere wobei der textile Träger (7, 8) ein textiles Flächengebilde, vorzugsweise ein Gewebe, Gewirke, Gestricke, Gelege, Gewirre, Vlies, Filz oder sonstiger Textilverbundstoff, ist und/oder insbesondere wobei der textile Träger (7, 8) ein Flächengewicht von 50 bis 300 g/m², insbesondere 75 bis 250 g/m², vorzugsweise 90 bis 175 g/m², aufweist.

13. Filtereinheit nach einem der vorangehenden Ansprüche, **dadurch gekennzeichnet, daß** die kornförmige Aktivkohle (5) und/oder die Aktivkohlefasern (6) eine spezifische innere Oberfläche (BET) von mindestens 800 m²/g, insbesondere mindestens 900 m²/g, vorzugsweise im Bereich von 800 bis 1.500 m²/g, aufweisen.

14. Filtereinheit nach einem der vorangehenden Ansprüche, **dadurch gekennzeichnet, daß** die kornförmige Aktivkohle (5) und/oder die Aktivkohlefasern (6) imprägniert sind, insbesondere wobei die Imprägnierung eine Imprägnierung auf Basis von Metallen und/oder Metallverbindungen, bevorzugt aus der Gruppe von Kupfer, Cadmium, Silber, Platin, Palladium, Zink und Quecksilber sowie deren Verbindungen, ist und/oder insbesondere wobei die Imprägnierung eine saure oder basische Imprägnierung, insbesondere auf Basis von Phosphorsäure, Kaliumcarbonat, Trimethanolamin, 2-Amino-1,3-propandiol, Schwefel oder Kupfersalzen, ist und/oder insbesondere wobei die Menge an Imprägniermittel, bezogen auf das imprägnierte Aktivkohlematerial, 0,01 bis 15 Gew.-%, insbesondere 0,05 bis 12 Gew.-%, vorzugsweise 5 bis 12 Gew.-%, beträgt.

15. Verwendung der Filtereinheit (1) nach einem der Ansprüche 1 bis 14 zur Reinigung von Luft, insbesondere zur Herstellung hochreiner Luft, und/oder zur Entfernung von Gas-, Geruchs- und/oder Giftstoffen aus Luftströmen.

16. Verwendung nach Anspruch 15, wobei die Filtereinheit (1) von der zu reinigenden Luft durchströmt wird.

17. Verwendung der Filtereinheit (1) nach einem der Ansprüche 1 bis 14 in (Be-) Lüftungsanlagen, Ventilationssystemen oder Klimaanlagen, insbesondere für geschlossene Umgebungen, wie Gebäude oder Innenräume von Fahrzeugen, wie Motorfahrzeugen, Schienenfahrzeugen, Transportmitteln aller Art und dergleichen.

18. Verwendung nach einem der Ansprüche 15 bis 17, **dadurch gekennzeichnet, daß** die Filtereinheit (1) nur im Bedarfsfall, insbesondere bei Vorhandensein von Gas-, Geruchs- und/oder Giftstoffen in den zu reinigenden Luftströmen, zugeschaltet wird.

19. Anlage (11) zur Luftreinigung und/oder Bereitstellung oder Aufbereitung von Luft, insbesondere (Be-)Lüftungsanlage, Ventilationssystem oder Klimaanlage, mit einer Filtereinheit (1), **dadurch gekennzeichnet, daß** die Filtereinheit (1) nach einem der Ansprüche 1 bis 14 ausgebildet ist.

## Claims

1. Filter unit (1), in particular for the purification of air, having a plurality of adsorbing filter elements (2, 3, 4) which in each case contain as adsorption material adsorbents based on activated charcoal, the filter element (1) including
(i) at least one first filter element (2) which comprises as adsorption material granular, in particular spherical activated charcoal (5),
(ii) at least one further filter element (4) which comprises as adsorption material granular, in particular spherical activated charcoal (5), and
(iii) at least one second filter element (3) which comprises as adsorption material a combination of granular, in particular spherical activated charcoal (5) and activated charcoal fibres (6), the average particle diameter of the granular activated charcoal (5) being at least three times larger than the average fibre diameter of the activated charcoal fibres (6), and the granular activated charcoal (5) and the activated charcoal fibres (6) being arranged in separate layers which, however, are contiguous to one another and are permanently connected to one another,
the filter elements (2, 3, 4) being arranged downstream in the above-specified order of one after the other in the filter unit (1),
the average particle diameter of the granular activated charcoal (5) of the first filter element (2) being at least 0.05 mm larger than the average particle diameter of the granular activated charcoal (5) of the further filter element (4) arranged between the first filter element (2) and the second filter element (3), and
the granular activated charcoal (5) of the first filter element (2) and/or of the further filter element (4) arranged between the first filter element (2) and the second filter element (3) being fastened to a three-dimensional air-permeable carrier structure (9).

2. Filter unit according to Claim 1, **characterized in that** the filter elements (2, 3, 4) are preceded by a separation filter element (10) for the separation of solid particles, in particular dust particles, in particular the separation filter element (10) being a textile structure, in particular a woven, worked or knitted fabric, contexture, tangle, nonwoven, felt or other composite textile material, and/or, in particular, the separation filter element (10) bringing about a purely mechanical separation of solid particles.

3. Filter unit according to one of the preceding claims, **characterized in that** the granular activated charcoal (5) of the first filter element (2) and/or of the further filter element (4) arranged between the first filter element (2) and the second filter element (3) is adhesively bonded to the three-dimensional air-permeable carrier structure (9), in particular the three-dimensional carrier structure (9) being an open-pored foam, preferably a reticulated polyurethane (PU) foam.

4. Filter unit according to Claim 3, **characterized in that** the average pore diameter of the open-pored foam is at least twice as large, in particular at least two and a half times as large, preferably at least three times as large as the average particle diameter of the granular activated charcoal (5) of the first filter element (2) and/or of the further filter element (4) arranged between the first filter element (2) and the second filter element (3), and/or **in that** the adhesive bonding of the granular activated charcoal (5) to the three-dimensional carrier structure (9) takes place by means of moisture-crosslinking and/or heat-crosslinking, in particular reactive (melt) adhesives, preferably based on polyurethane.

5. Filter unit according to one of the preceding claims, **characterized in that** the average particle diameter of the granular activated charcoal (5) of the first filter element (2) is at least 0.1 mm larger, preferably at least 0.15 mm larger, particularly preferably at least 0.2 mm larger, most particularly preferably at least 0.25 mm larger than the average particle diameter of the granular activated charcoal (5) of the further filter element (4) arranged between the first filter element (2) and the second filter element (3).

6. Filter unit according to one of the preceding claims, **characterized in that** the average particle diameter of the granular activated charcoal (5) of the first filter element (2) lies in the range of 0.5 to 1 mm and amounts, in particular, to at least 0.5 mm, in particular at least 0.6 mm, preferably at least 0.65 mm, and/or **in that** the average particle diameter of the granular activated charcoal (5) of the further filter element (4) arranged between the first filter element (2) and the second filter element (3) lies in the range of 0.1 to 0.6 mm, in particular 0.2 to 0.6 mm, preferably 0.3 to 0.6 mm.

7. Filter unit according to one of the preceding claims, **characterized in that** the average particle diameter of the granular activated charcoal (5) of the second filter element (3) lies in the range of 0.05 to 1 mm, in particular 0.1 to 0.8 mm, preferably 0.1 to 0.6 mm.

8. Filter unit according to one of the preceding claims, **characterized in that** the granular activated charcoal (5) is produced by the carbonization and subsequent activation of suitable organic starting materials in granular form, preferably in spherical form, in particular of suitable polymers, such as divinylbenzene-crosslinked polystyrene, in particular in the form of ion exchangers or their precursors, or of pitches.

9. Filter unit according to one of the preceding claims, **characterized in that** the activated charcoal fibres (6) are produced by the carbonization and subsequent activation of suitable organic initial fibres, in particular of cellulose fibres, fibres based on cellulose derivatives, phenol resin fibres, polyvinylalcohol fibres, pitch fibres, acrylic resin fibres, polyacrylonitrile fibres, aromatic polyamide fibres, formaldehyde resin fibres, divinylbenzene-crosslinked polystyrene fibres, lignin fibres, cotton fibres and/or hemp fibres, preferably of fibres based on cellulose and cellulose derivatives.

10. Filter unit according to one of the preceding claims, **characterized in that** the activated charcoal fibres (6) are present as an activated charcoal fibre textile structure, in particular as a woven, worked or knitted fabric, contexture, tangle, fleece, felt or other composite textile material, preferably as a nonwoven material, in particular the activated charcoal fibre textile structure having a weight per unit area of 10 to 200 g/m², in particular of 10 to 150 g/m², preferably of 10 to 120 g/m², particularly preferably of 20 to 100 g/m², most particularly preferably of 25 to 80 g/m², and/or **in that** the activated charcoal fibres (6) have an average fibre diameter of 1 to 25 µm, in particular of 2.5 to 20 µm, preferably of 5 to 15 µm, and/or **in that** the activated charcoal fibres (6) have a length-related mass (titre) of 1 to 10 dtex, in particular of 1 to 5 dtex.

11. Filter unit according to one of the preceding claims, **characterized in that** the layer with the granular activated charcoal (5) and the layer with the activated charcoal fibres (6) can form a composite structure.

12. Filter unit according to one of the preceding claims, **characterized in that**, in the second filter element (3), the granular activated charcoal (5) and/or the activated charcoal fibres (6) are fastened to an air-permeable, preferably textile carrier (7, 8), in particular adhesively bonded thereto, in particular the textile carrier (7, 8) being a sheet-like textile structure, preferably a woven, worked or knitted fabric, contexture, tangle, fleece, felt or other composite textile material, and/or, in particular, the textile carrier (7, 8) having a weight per unit area of 50 to 300 g/m², in particular of 75 to 250 g/m², preferably of 90 to 175 g/m².

13. Filter unit according to one of the preceding claims, **characterized in that** the granular activated charcoal (5) and/or the activated charcoal fibres (6) have a specific internal surface (BET) of at least 800 m²/g, in particular of at least 900 m²/g, preferably in the range of 800 to 1500 m²/g.

14. Filter unit according to one of the preceding claims, **characterized in that** the granular activated charcoal (5) and/or the activated charcoal fibres (6) are impregnated, in particular the impregnation being an impregnation based on metals and/or metal compounds, preferably from the group of copper, cadmium, silver, platinum, palladium, zinc and mercury and their compounds, and/or, in particular, the impregnation being an acid or basic impregnation, in particular based on phosphoric acid, potassium carbonate, trimethanolamine, 2-amino-1,3-propanediol, sulphur or copper salts, and/or in particular, the quantity of impregnating agent in relation to the impregnated activated charcoal material amounting to 0.01 to 15 % by weight, in particular 0.05 to 12 % by weight, preferably 5 to 12 % by weight.

15. Use of the filter unit (1) according to one of Claims 1 to 14 for the purification of air, in particular for the production of high-purity air, and/or for the removal of gaseous, odoriferous and/or toxic substances from air streams.

16. Use according to Claim 15, the air to be purified flowing through the filter unit (1).

17. Use of the filter unit (1) according to one of Claims 1 to 14 in aerating installations, ventilation systems or air-conditioning installations, in particular for closed environments, such as buildings or interiors of vehicles, such as motor vehicles, rail vehicles, transport means of all types and the like.

18. Use according to one of Claims 15 to 17, **characterized in that** the filter unit (1) is connected only as required, in particular in the presence of gaseous, odoriferous and/or toxic substances in the air streams to be purified.

19. Installation (11) for air purification and/or for the provision or treatment of air, in particular aerating installation, ventilation system or air-conditioning installation, with a filter unit (1), **characterized in that** the filter unit (1) is designed according to one of Claims 1 to 14.

## Revendications

1. Unité de filtration (1), notamment pour la purification de l'air, avec une pluralité d'éléments de filtration adsorbants (2, 3, 4) contenant chacun des agents adsorbants à base de charbon actif en tant que matériau d'adsorption, l'unité de filtration (1) comprenant
(i) au moins un premier élément de filtration (2) comprenant, en tant que matériau d'adsorption, du charbon actif (5) sous forme de granulés, notamment de sphères,
(ii) au moins un autre élément de filtration (4) comprenant, en tant que matériau d'adsorption, du charbon actif (5) sous forme de granulés, notamment de sphères, et
(iii) au moins un deuxième élément de filtration (3) comprenant, en tant que matériau d'adsorption, une combinaison de charbon actif (5) sous forme de granulés, notamment de sphères, et de fibres de charbon actif (6), le diamètre moyen des particules du charbon actif (5) sous forme de granulés étant au moins trois fois supérieur au diamètre moyen des fibres de charbon actif (6) et le charbon actif (5) sous forme de granulés et les fibres de charbon actif (6) étant disposés dans des couches séparées mais juxtaposées et reliées l'une à l'autre de façon permanente,
les éléments de filtration (2, 3, 4) étant disposés, au sein de l'unité de filtration (1), l'un après l'autre en aval dans l'ordre précédemment spécifié,
le diamètre moyen des particules du charbon actif (5) sous forme de granulés du premier élément de filtration (2) étant d'au moins 0,05 mm plus grand que le diamètre moyen des particules du charbon actif (5) sous forme de granulés de l'autre élément de filtration (4) disposé entre le premier élément de filtration (2) et le deuxième élément de filtration (3), et
le charbon actif (5) sous forme de granulés du premier élément de filtration (2) et/ou de l'autre élément de filtration (4) disposé entre le premier élément de filtration (2) et le deuxième élément de filtration (3) étant fixé sur une structure de support (9) tridimensionnelle qui est perméable à l'air.

2. Unité de filtration selon la revendication 1, **caractérisée en ce qu'**un élément filtrant séparateur (10) est placé en amont des éléments de filtration (2, 3, 4) afin d'enlever par séparation des particules solides, notamment des particules de poussière, l'élément filtrant séparateur (10) étant plus particulièrement un produit textile, notamment un tissu, un tricot, une étoffe de bonneterie, un produit textile lié mécaniquement, un produit textile obtenu par enchevêtrement, un non-tissé, un feutre ou un autre tissu non-tissé et/ou l'élément filtrant séparateur (10) provoquant plus particulièrement un enlèvement de particules solides par une séparation purement mécanique.

3. Unité de filtration selon l'une des revendications précédentes, **caractérisée en ce que** le charbon actif (5) sous forme de granulés du premier élément de filtration (2) et/ou de l'autre élément de filtration (4) disposé entre le premier élément de filtration (2) et le deuxième élément de filtration (3) adhère à la structure de support (9) tridimensionnelle qui est perméable à l'air, ladite structure de support (9) tridimensionnelle étant notamment une mousse à cellules ouvertes, de préférence une mousse de polyuréthane (PU) réticulée.

4. Unité de filtration selon la revendication 3, **caractérisée en ce que** la porosité moyenne de la mousse à cellules ouvertes est au moins deux fois plus grande, notamment au moins deux et demi fois plus grande, de préférence au moins trois fois plus grande que le diamètre moyen des particules du charbon actif (5) sous forme de granulés du premier élément de filtration (2) et/ou de l'autre élément de filtration (4) disposé entre le premier élément de filtration (2) et le deuxième élément de filtration (3) et/ou que l'adhérence entre le charbon actif (5) sous forme de granulés et la structure de support (9) tridimensionnelle est effectuée au moyen d'adhésifs dont la réticulation est déclenchée par l'humidité ou par la chaleur, s'agissant notamment d'adhésifs (fusibles) réactifs, de préférence à base de polyuréthane.

5. Unité de filtration selon l'une des revendications précédentes, **caractérisée en ce que** le diamètre moyen des particules du charbon actif (5) sous forme de granulés du premier élément de filtration (2) est d'au moins 0,1 mm, de préférence d'au moins 0,15 mm, avec une préférence particulière d'au mois 0,2 mm et, avec une préférence toute particulière, d'au moins 0,25 mm plus grand que le diamètre moyen des particules du charbon actif (5) sous forme de granulés de l'autre élément de filtration (4) disposé entre le premier élément de filtration (2) et le deuxième élément de filtration (3).

6. Unité de filtration selon l'une des revendications précédentes, **caractérisée en ce que** le diamètre moyen des particules du charbon actif (5) sous forme de granulés du premier élément de filtration (2) est compris entre 0,5 et 1 mm, sa valeur est notamment d'au moins 0,5 mm, notamment d'au moins 0,6 mm, de préférence d'au moins 0,65 mm et/ou que le diamètre moyen des particules du charbon actif (5) sous forme de granulés de l'autre élément de filtration (3) disposé entre le premier élément de filtration (5) et le deuxième élément de filtration (2) est compris entre 0,1 et 0,6 mm, notamment entre 0,2 et 0,6 mm, de préférence entre 0,3 et 0,6 mm.

7. Unité de filtration selon l'une des revendications précédentes, **caractérisée en ce que** le diamètre moyen des particules du charbon actif (5) sous forme de granulés du deuxième élément de filtration (3) est compris entre 0,05 et 1 mm, notamment entre 0,1 et 0,8 mm, de préférence entre 0,1 et 0,6 mm.

8. Unité de filtration selon l'une des revendication précédentes, **caractérisée en ce que** le charbon actif (5) sous forme de granulés est fabriqué par carbonisation puis activation de matières organiques de départ appropriées sous forme de granules, de préférence sous forme de sphères, s'agissant notamment de polymères appropriés comme le polystyrène réticulé au divinylbenzène, plus particulièrement sous forme d'échangeurs d'ions et de leurs précurseurs, ou s'agissant de poix.

9. Unité de filtration selon l'une des revendications précédentes, **caractérisée en ce que** les fibres de charbon actif (6) sont fabriquées par carbonisation puis activation de fibres organiques de départ appropriées, notamment de fibres de cellulose, de fibres à base de dérivés de cellulose, de fibres de résine de phénol, de fibres d'alcool polyvinylique, de fibres de poix, de fibres de résine acrylique, de fibres de polyacrylonitrile, de fibres de polyamides aromatiques, de fibres de résine de formaldéhyde, de fibres de polystyrène réticulés au divinylbenzène, de fibres de lignine, de fibres de coton et/ou de fibres de chanvre, s'agissant de préférence de fibres à base de cellulose et de dérivés de cellulose.

10. Unité de filtration selon l'une des revendications précédentes, **caractérisée en ce que** les fibres de charbon actif (6) se présentent sous forme d'un produit textile de fibres de charbon actif, notamment sous forme d'un tissu, d'un tricot, d'une étoffe de bonneterie, d'un produit textile lié mécaniquement, d'un produit textile obtenu par enchevêtrement, d'un non-tissé, d'un feutre ou d'un autre tissu non-tissé, préférentiellement d'un matériau dit non-woven, ledit produit textile de fibres de charbon actif présentant une masse surfacique comprise entre 10 et 200 g/m², notamment entre 10 et 150 g/m², de préférence entre 10 et 120 g/m², avec une préférence particulière entre 20 et 100 g/m² et, avec une préférence toute particulière, entre 25 et 80 g/m², et/ou que les fibres de charbon actif (6) présentent un diamètre moyen des fibres compris entre 1 et 25 µm, notamment entre 2,5 et 20 µm, de préférence entre 5 et 15 µm, et/ou que les fibres de charbon actif (6) présentent une masse rapportée à la longueur (titre) comprise entre 1 et 10 dtex, notamment entre 1 et 5 dtex.

11. Unité de filtration selon l'une des revendications précédentes, **caractérisée en ce que** la couche comportant le charbon actif (5) sous forme de granulés et la couche comportant les fibres de charbon actif (6) peuvent former une unité composite.

12. Unité de filtration selon l'une des revendications précédentes, **caractérisée en ce que**, chez le deuxième élément de filtration (3), le charbon actif (5) sous forme de granulés et/ou les fibres de charbon actif (6) est fixé sur un support (7, 8) perméable à l'air et préférentiellement de nature textile, ladite fixation étant notamment réalisée par collage et le support textile (7, 8) formant notamment une structure bidimensionnelle textile, de préférence un tissu, un tricot, une étoffe de bonneterie, un produit textile lié mécaniquement, un produit textile obtenu par enchevêtrement, un non-tissé, un feutre ou un autre tissu non-tissé et/ou le support textile (7, 8) présentant notamment une masse surfacique comprise entre 50 et 300 g/m², notamment entre 75 et 250 g/m², de préférence entre 90 et 175 g/m².

13. Unité de filtration selon l'une des revendications précédentes, **caractérisée en ce que** le charbon actif (5) sous forme de granulés et/ou les fibres de charbon actif (6) présentent une surface intérieure spécifique (BET) d'au moins 800 m²/g, notamment d'au moins 900 m²/g, sa valeur étant préférentiellement comprise entre 800 et 1 500 m²/g.

14. Unité de filtration selon l'une des revendications précédentes, **caractérisée en ce que** le charbon actif (5) sous forme de granulés et/ou les fibres de charbon actif (6) sont imprégnés, l'imprégnation étant notamment réalisée à base de métaux et/ou de composés de métaux, issus préférentiellement du groupe constitué par le cuivre, le cadmium, l'argent, le platine, le palladium, le zinc et le mercure ainsi que de leurs composés, et/ou l'imprégnation étant notamment de type acide ou alcalin, plus particulièrement à base d'acide phosphorique, de carbonate de potassium, de triméthanolamine, de 2-amino-1,3-propanediol, de soufre ou de sels de cuivre, et/ou la quantité de l'agent d'imprégnation étant notamment comprise entre 0,01 et 15 % en poids, notamment entre 0,05 et 12 % en poids, de préférence entre 5 et 12 % en poids, par rapport au matériau de charbon actif imprégné.

15. Utilisation de l'unité de filtration (1) selon l'une des revendications 1 à 14 pour la purification de l'air, notamment pour la production d'air ultra-pur, et/ou pour éliminer des substances gazeuses, odorantes et/ou toxiques de flux d'air.

16. Utilisation selon la revendication 15, l'unité de filtration (1) étant traversée par le flux d'air à purifier.

17. Utilisation de l'unité de filtration (1) selon l'une des revendications 1 à 14 dans des installations d'aération, des systèmes de ventilation ou des climatiseurs, notamment destinés à des espaces clos tels que les immeubles, les habitacles de véhicules comme les véhicules motorisés, les véhicules ferroviaires, les moyens de transport de tout type et les dispositifs apparentés.

18. Utilisation selon l'une des revendications 15 à 17, **caractérisée en ce que** l'unité de filtration (1) n'est activée qu'en cas de besoin, notamment en cas de présence de substances gazeuses, odorantes et/ou toxiques dans les flux d'air à purifier.

19. Installation (11) destinée à la purification de l'air et/ou à la mise à disposition ou au traitement de l'air, s'agissant notamment d'une installation d'aération, d'un système de ventilation ou d'un climatiseur pourvu(e) d'une unité de filtration (1), **caractérisée en ce que** l'unité de filtration (1) est réalisée selon l'une des revendications 1 à 14.
